# EUROPEAN PATENT SPECIFICATION

(11) **EP 2 454 567 B1**
(45) Date of publication and mention of the grant of the patent: **14.02.2018**
(21) Application number: 10747304.3
(22) Date of filing: 22.06.2010
(51) Int. Cl.: G01G 11/00, G01G 19/62, G01G 13/285, B29C 49/78

(54) **SYSTEM FOR INSPECTING AND WEIGHTING OBJECTS, PARTICULARLY PREFORMS**
SYSTEM ZUR PRÜFUNG UND BEWERTUNG VON OBJEKTEN, IM BESONDEREN VORFORMEN
SYSTÈME POUR INSPECTER ET PESER DES OBJETS, EN PARTICULIER DES ÉBAUCHES

(30) Priority: 17.07.2009 IT RM20090377
(43) Date of publication of application: 23.05.2012
(73) Proprietor: SACMI - Cooperativa Meccanici Imola - Societa' Cooperativa, 40026 Imola - BO (IT)
(72) Inventor: SCALINI, Cristian, I-40026 Imola - BO (IT); TONTINI, Walter, I-40026 Imola - BO (IT)
(74) Representative: Iannone, Carlo Luigi
(86) International application number: PCT/IT2010/000276
(87) International publication number: WO 2011/007378

(56) References cited:
- EP-A1- 0 698 468
- EP-A1- 1 931 973
- DE-A1-102005 060 814
- DE-U1-202004 021 491
- US-A- 2 822 577
- US-A1- 2003 008 029
- US-A1- 2003 056 996

## Description

The present invention relates to a system for inspecting and weighting objects, particularly preforms.

More specifically, the invention concerns a system of the above kind permitting carrying out both operations of objects having a substantially elongated shape, and preferably on preforms, said objects being advanced along manufacturing lines.

In the following the specification will be specifically addressed to working of preforms, but, as already said, the same technical teachings can be applied on different objects.

As it is well known, a relevant role in manufacturing lines is played by possibility of inspecting products, and particularly preforms, i.e. those artefacts made up of PET (polyethylene) that, by a subsequent suitable operation process, are suitable to be transformed into PET containers, such as bottles, ensuring the highest reliability, without slowing the manufacturing.

Systems exist for inspecting preforms, said systems being substantially comprised of a supply device supplying preforms to a tunnel, from which they are brought along a path, in correspondence of which different cameras are provided, said camera acquiring different images of preforms.

Inspection is carried out on a sample of products along the manufacturing system.

Usually, a selection device is provided at the exit of the inspection system, said device separating "good" preforms, which are sent beyond for further working steps, from those to be discarded.

A weighting operation is sometimes carried out after the inspection.

At present, said weighting is manually carried out in the laboratory.

In this situation, it is well evident the advantage of having a system as the one suggested according to the present invention, permitting automatically carrying out the operation on sample subjected to inspection, preferably in a higher number of samples preforms (5), known systems, by specialised labour.

In this context, the Applicant suggest, according to the present invention, introducing a weighting system, between the inspection system and the selection device, being it possible carrying out automatically both inspection and weighting operations. It is therefore specific object of the present invention a system for automatic evaluation of preforms, providing an inspection system, to which preforms are supplied, a weighing system, downward the inspection system, and a selection system, downward the weighing system, said preforms being transferred from the inspection system to the weighing system with a set orientation, said system characterized in that a support is provided downward the system for transferring preforms, substantially an elongated V shaped support, having an inner groove on correspondence of V vertex, permitting contacting perform tip and stabilizing its oscillations due to the fall impact, preform resting within said groove, terminating passage from a substantially vertical position to a substantially horizontal position. According to the invention, said inspection system provides a supply system and a tunnel, along which preforms advance following a path in correspondence of which cameras for observing preforms are provided. Always according to the invention, transfer of preforms from inspection system to the weighting system is realized by a channel comprised of plastic material cannulae, particularly eight cannulae. Still according to the invention, a support is provided downward the system for transferring preforms, substantially an elongated V shaped support, having an inner groove on correspondence of V vertex, permitting contacting preform tip and stabilizing its oscillations due to the fall impact, preform resting within said groove, terminating passage from a substantially vertical position to a substantially horizontal position. Furthermore, according to the invention, at the end of said support, it is provided a stop system or blades, rotating according to the preform advancement direction within the weighting system, along a belt, to stop preform arriving from the support and, after weighting, supplying it to the selection system. Still according to the invention, said weighting system provides a load cell on masse, particularly masse weighting 60 kg, resting on anti-vibration elements, so as to eliminate all low frequency vibrations.

Furthermore, according to the invention, said preform selection system is of the pneumatic type.

The present invention will be now described, for illustrative, but not limitative purposes, according to its preferred embodiments, with particular reference to the figures of the enclosed drawings, wherein:
figure 1 is a perspective view of an inspection and weighting system according to the invention;
figure 2 is a lateral view of the weighting portion of the system according to the invention;

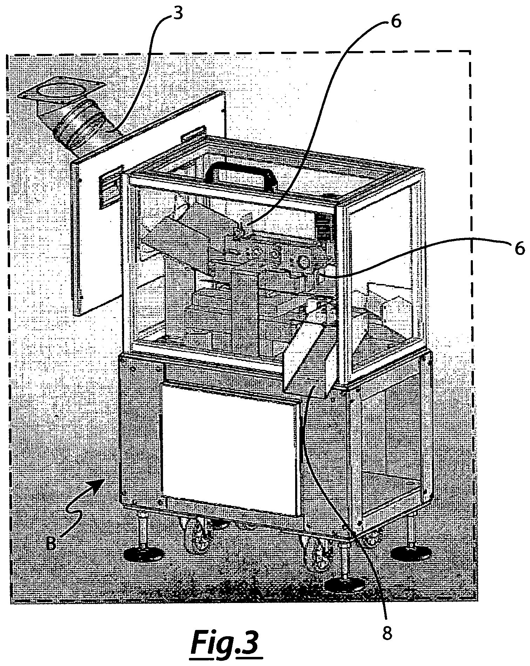

figure 3 is a total perspective view of the weighting portion of the system according to the invention;
figure 4 shows a first particular of the weighting portion of the system according to the invention;
figure 5 shows a second particular of the weighting portion of the system according to the invention;
figure 6 shows the second particular of the weighting portion of the system according to the invention in a second working step;
figure 7 is a front view of particular of figure 5;
figure 8 is a perspective view of a further particular of the system according to the invention; and

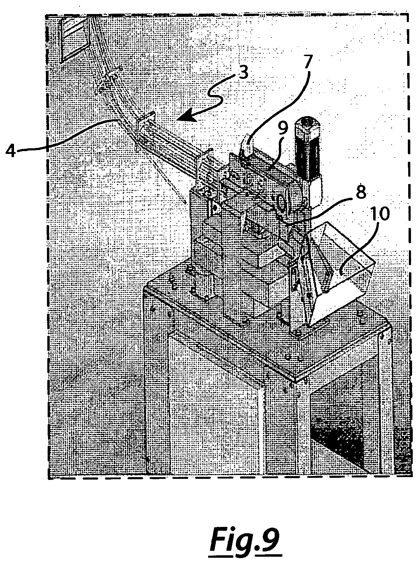

figure 9 is a top perspective view of the weighting portion of the system according to the invention.

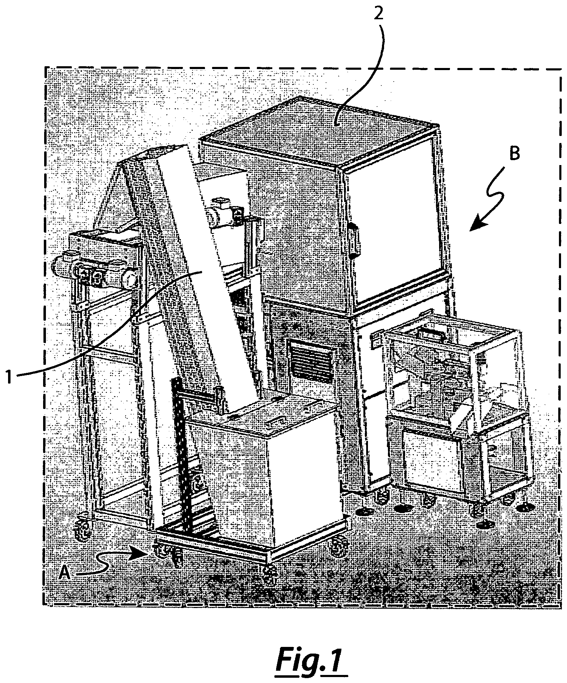

Observing first figure 1, it is shown a system according to the invention, providing a preform inspection portion A and a preform weighting portion B, before selection of the "good" preforms with respect to those to be discharged.

Inspection system A, that will be not described particularly, since it can be realised by known solutions, provides a supply device 1, supplying preforms (not shown in this figure) to a tunnel 2, within which preforms advance along a path, in correspondence of which cameras (not shown) are provided, said cameras acquiring images of the different parts of preforms.

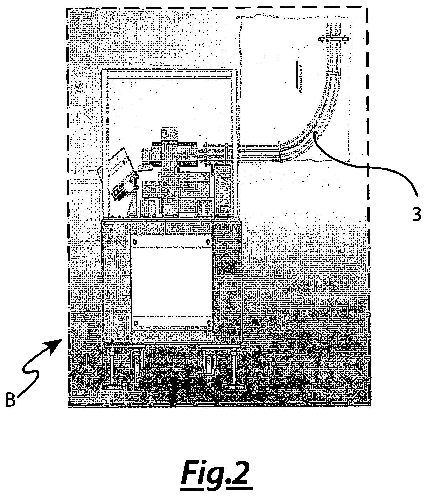

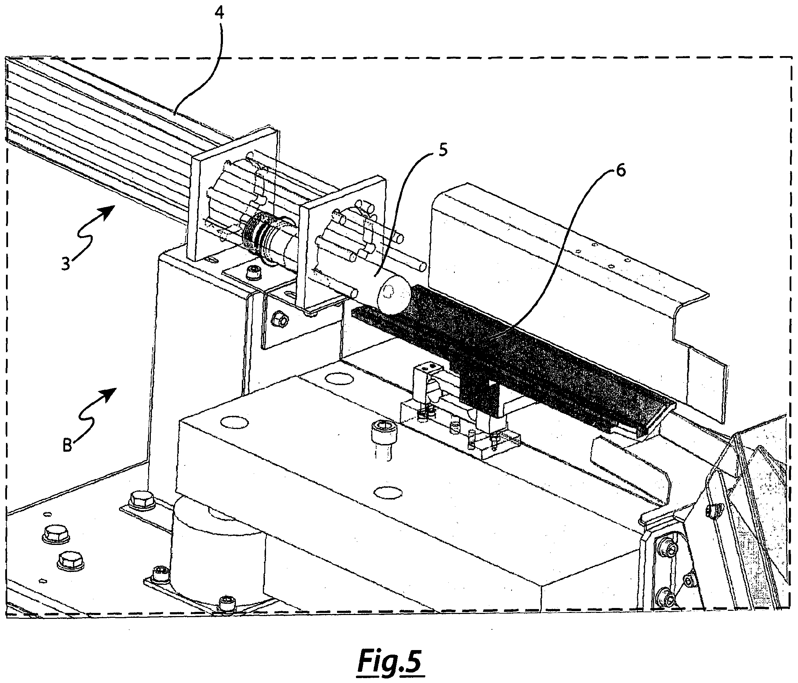

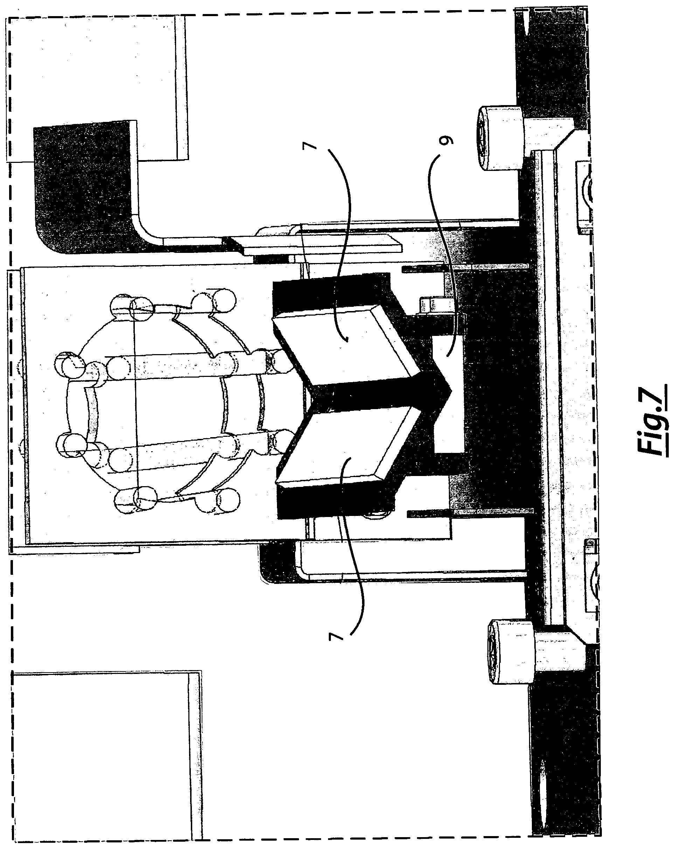

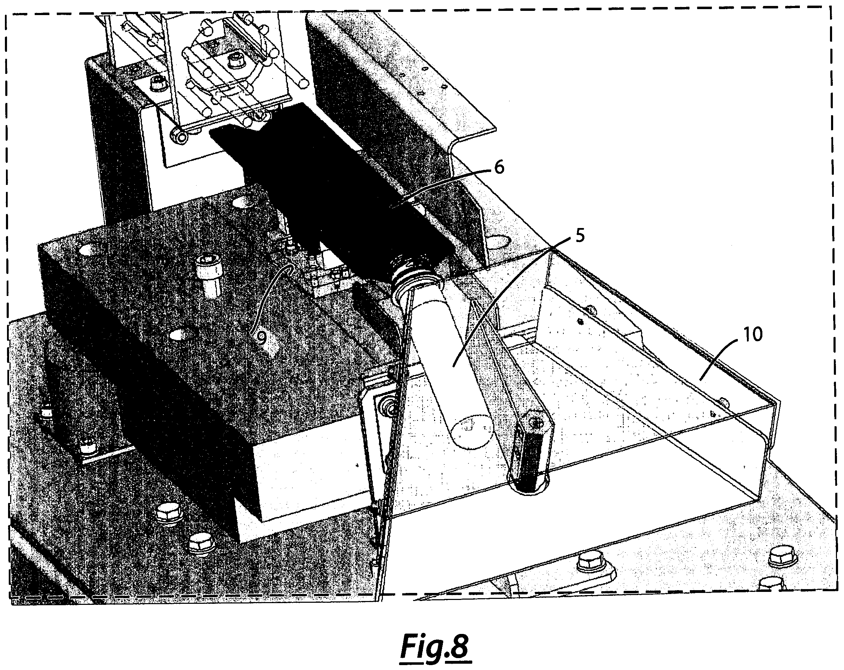

At the exit of inspection system A, it is provided a channel 3 (see figure 2), comprised of a plastic material channel 4 (that can be well seen from figures 5 - 8), transferring preform toward weighting system B. Preform of figures 5 - 8 is indicated by reference number 5.

Particularly, two lower cannulae 4 permit to preforms having a constant inlet position on guide 6.

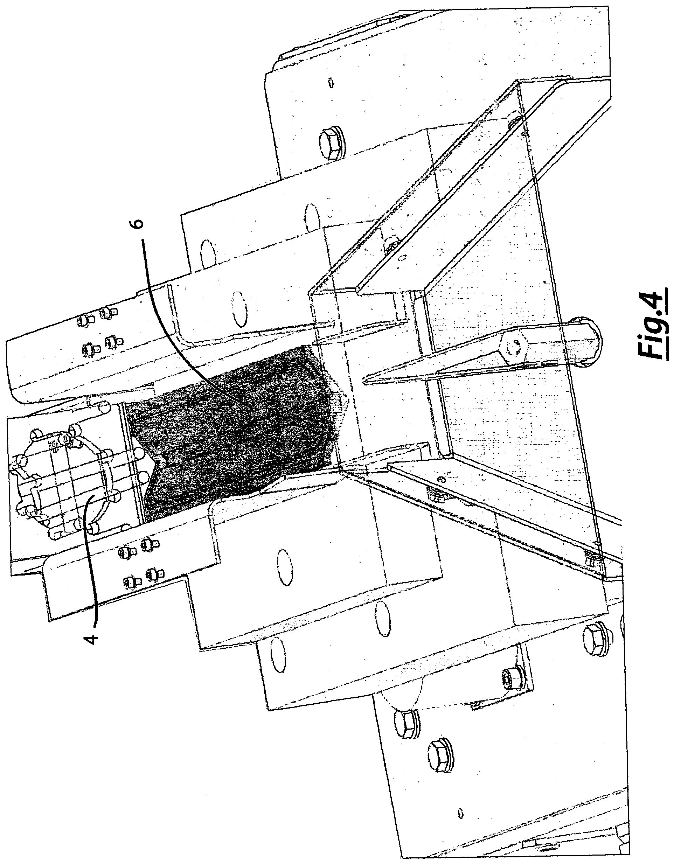

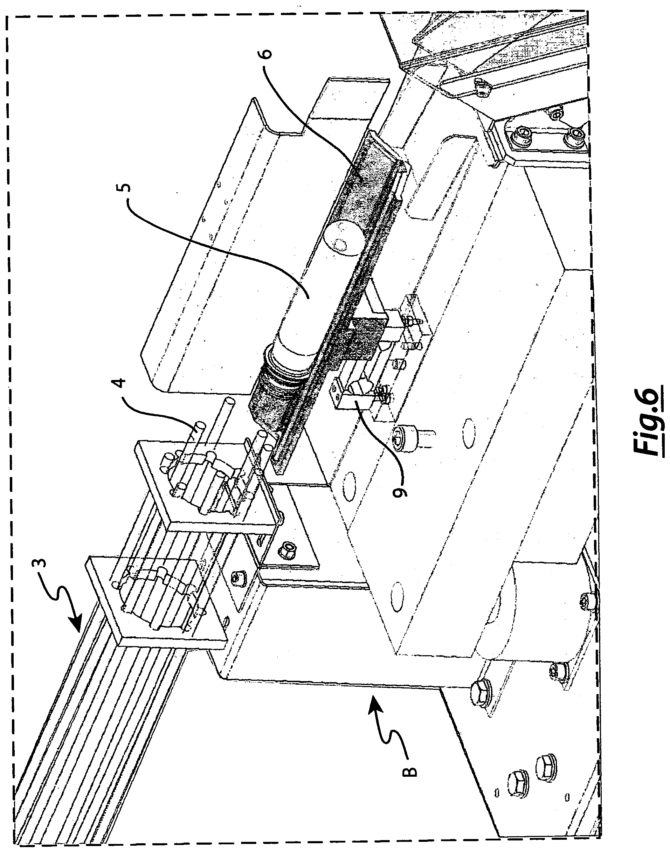

At the inlet of the weighting system B (figure 4), preforms 5, arrived through channel 3, is received on a substantially V-shaped support 6, developing in length, and provided with an inner groove, in correspondence of the support 6 V apex, permitting realising a contact with preform 5 tip and stabilizing oscillations of the same due to the impact caused by falling (see figures 5 and 6).

Said support 6 is comprised of a crystalline polymer, particularly polyoxymethylene or POM-C, material selected for its capability of quickly dampening oscillations of preform 5 hitting on support 6 at the inlet of the weighting system B.

Polyoxymethylene or POM-C, which is an acetalic resin, is a crystalline polymer, discovered during the '60, obtained by polymerisation of formaldehyde. It can be of the copolymer (C) or homopolimer (H) type; first one is more resistant to hydrolysis, to thermo-oxidising degradation, and strong alkali, while the second one has a better rigidity, a better creep resistance and better mechanical properties; furthermore, it has a better thermal dilatation coefficient. Said material is well suitable to working with automatic lathe and it is advisable for realising precision particulars.

Further, support 6 is coated with anti-oil strips 7 permitting a more efficient stabilisation of preform. It is a nitrilic rubber, resistant to, animal and vegetal, mineral oils and fats, with good mechanical properties under temperature up to 100 °C.

A pair of palette 8 is provided at the end of preform path along V-shaped support, on a rotating belt, following preform 5 during weighting phase up to its discharging.

Blade 8 and rubber strips 7 make preform bouncing following the hit against blades 8, always in a set a reproducible point/position, permitting a reproduction reliability of weighting operations.

In correspondence of the preform 5 bouncing position on blade 8, a known load cell 9 is provided, measuring preform weight.

Load cell 9 is mounted over 90 kg masses resting on antivibration elements, so as to eliminate all low frequency vibrations that could alter measurements.

Preform 5 is conveyed outside the weighting system B by palette 8, one of which, rotating, pushes preform outward, toward a selector 10, that can pass from a discharging position to a preform choice position, particularly by pneumatic pistons.

## Claims

1. System for automatic evaluation of preforms, providing an inspection system (A), to which preforms are supplied, a weighting system (B), load cell (9) inspection system, and a selection system, downward the weighting system, said preforms being transferred from the inspection system to the weighting system with a set orientation, said system **characterized in that** a support (6) is provided downward the system for transferring preforms, substantially an elongated V shaped support, having an inner groove on correspondence of V vertex, permitting contacting preform (5) tip and stabilizing its oscillations due to the fall impact of the preform (5) on the support (6), preform resting within said groove, terminating passage from a substantially vertical position to a substantially horizontal position.

2. System according to claim 1, **characterized in that** said inspection system provides a supply system and a tunnel (2), along which preforms advance following a path in correspondence of which cameras for observing preforms are provided.

3. System according to one of the preceding claims, **characterized in that** transfer of preforms from inspection system to the weighting system is realized by a channel (3) comprised of plastic material cannulae (4).

4. System according to claim 3, **characterized in that** said channel provides eight cannulae.

5. System according to one of the preceding claims, **characterized in that** said support (6) is comprised of crystalline polymeric material, preferably an acetalic resin, and particularly polyoxymethylene or POM-C, and it is coated with nitrilic rubber or anti-oil strips.

6. System according to one of the preceding claims, **characterized in that**, at the end of said support (6), it is provided a stop system or blades (8), rotating according to the preform advancement direction within the weighting system, along a belt, to stop preform arriving from the support and, after weighting, supplying it to the selection system.

7. System according to one of the preceding claims, **characterized in that** said weighting system provides a load cell on masse, particularly masse weighting 60 kg, resting on anti-vibration elements, so as to eliminate all low frequency vibrations.

8. System according to one of the preceding claims, **characterized in that** said preform selection system is of the pneumatic type.

## Patentansprüche

1. System zur automatischen Bewertung von Vorformen, wobei ein Prüfsystem (A), welchem Vorformen zugeführt werden, ein Wiegesystem (B), ein Wägezellen-Prüfsystem (9) und ein unterhalb des Wiegesystems vorgesehenes Auswahlsystem bereitgestellt werden, wobei die Vorformen vom Prüfsystem zum Wiegesystem in einer bestimmten Orientierung übertragen werden, wobei das System **dadurch gekennzeichnet ist, dass** eine unterhalb des Systems zur Übertragung der Vorformen angeordnete, im Wesentlichen längliche V-förmige Auflage (6) vorgesehen ist, die eine innere Nut in Entsprechung des V-Scheitels aufweist, welche ein Kontaktieren einer Spitze der Vorform (5) erlaubt und Schwingungen aufgrund eines Fallaufpralls der Vorform (5) auf der Auflage (6) stabilisiert, wobei die Vorform in der Nut ruht und einen Durchgang von einer im Wesentlichen vertikalen Position zu einer im Wesentlichen horizontalen Position abschließt.

2. System nach Anspruch 1, **dadurch gekennzeichnet, dass** das Prüfsystem ein Zufuhrsystem und einen Tunnel (2) bereitstellt, entlang dem Vorformen einem Pfad folgend weiterbefördert werden, wobei in Entsprechung mit diesem Kameras zur Überwachung der Vorformen vorgesehen sind.

3. System gemäß einem der vorgehenden Ansprüche, **dadurch gekennzeichnet, dass** die Übertragung der Vorformen vom Prüfsystem zum Wiegesystem mittels eines Kanals (3) erfolgt, der Kunststoffmaterialkanülen (4) umfasst.

4. System nach Anspruch 3, **dadurch gekennzeichnet, dass** der Kanal acht Kanülen bereitstellt.

5. System gemäß einem der vorhergehenden Ansprüche, **dadurch gekennzeichnet, dass** die Auflage (6) ein kristallines Polymermaterial, vorzugsweise einen Acetalharz, und insbesondere Polyoxymethylen oder POM-C, umfasst und mit Nitrilgummi oder Anti-Öl Streifen beschichtet ist.

6. System gemäß einem der vorhergehenden Ansprüche, **dadurch gekennzeichnet, dass** am Ende der Auflage (6) ein Stoppsystem oder Klingen (8) vorgesehen sind, die sich entlang eines Bandes entsprechend der Vorform-Fortbewegungsrichtung innerhalb des Wiegesystems drehen, um die von der Auflage ankommende Vorform zu stoppen und nach dem Wiegen ins Auswahlsystem weiterzuleiten.

7. System gemäß einem der vorgehenden Ansprüche, **dadurch gekennzeichnet, dass** das Wiegesystem eine Wägezelle auf Massen, insbesondere 60 kg wiegenden Massen umfasst, die auf Schwingungsdämpferelementen aufliegen, um alle niederfrequenten Schwingungen zu beseitigen.

8. System gemäß einem der vorgehenden Ansprüche, **dadurch gekennzeichnet, dass** das Vorform-Auswahlsystem pneumatischer Art ist.

## Revendications

1. Système pour l'évaluation automatique d'ébauches, prévoyant
un système d'inspection (A), auquel les ébauches sont fournies, un système de pesage (B), un système d'inspection de cellule de charge (9) et un système de sélection, en aval du système de pesage, lesdites ébauches étant transférées du système d'inspection au système de pesage avec une orientation fixée, ledit système étant **caractérisé en ce qu'**un support (6) est prévu en aval du système pour transférer les ébauches, sensiblement un support en forme de V allongé, ayant une rainure intérieure en correspondance du sommet du V, permettant un contact avec la pointe de l'ébauche (5) et la stabilisation de ses oscillations en raison de l'impact de chute de l'ébauche (5) sur le support (6), l'ébauche reposant à l'intérieur de ladite rainure, achevant le passage d'une position sensiblement verticale à une position sensiblement horizontale.

2. Système selon la revendication 1, **caractérisé en ce que** ledit système d'inspection dispose d'un système d'alimentation et d'un tunnel (2), le long duquel des ébauches avancent en suivant un chemin en correspondance duquel des appareils de prise de vues sont prévus pour observer les ébauches.

3. Système selon l'une des revendications précédentes, **caractérisé en ce que** le transfert des ébauches depuis le système d'inspection vers le système de pesage est réalisé par un canal (3) composé de canules en matière plastique (4).

4. Système selon la revendication 3, **caractérisé en ce que** ledit canal dispose de huit canules.

5. Système selon l'une des revendications précédentes, **caractérisé en ce que** ledit support (6) est composé de matière polymère cristalline, de préférence une résine acétalique, et particulièrement du polyoxyméthylène ou du POM-C, et il est couvert de bandes de caoutchouc nitrile ou anti-huile.

6. Système selon l'une des revendications précédentes, **caractérisé en ce que**, au niveau de l'extrémité dudit support (6), un système de butée ou des ailettes (8) sont prévues, tournant selon le sens d'avancement de l'ébauche à l'intérieur du système de pesage, le long d'une courroie, pour arrêter l'ébauche arrivant du support et, après le pesage, la fournissant au système de sélection.

7. Système selon l'une des revendications précédentes, **caractérisé en ce que** ledit système de pesage dispose d'une cellule de charge sur une masse, particulièrement une masse pesant 60 kg, reposant sur des éléments anti-vibration, afin d'éliminer toutes les vibrations basse fréquence.

8. Système selon l'une des revendications précédentes, **caractérisé en ce que** ledit système de sélection d'ébauche est du type pneumatique.
